# EUROPÄISCHE PATENTSCHRIFT

(11) **EP 1 486 701 B1**
(45) Veröffentlichungstag und Bekanntmachung des Hinweises auf die Patenterteilung: **05.12.2007**
(21) Anmeldenummer: 03013214.6
(22) Anmeldetag: 12.06.2003
(51) Int. Cl.: F16H 41/24, F16H 41/30

(54) **Hydrodynamischer Drehmomentwandler mit zumindest einer das Leitrad abstützenden Axiallagerung**
Torque converter with an axial bearing supporting the stator
Convertisseur de couple avec un roulement axial supporté le stator

(43) Veröffentlichungstag der Anmeldung: 15.12.2004
(73) Patentinhaber: ZF Sachs AG, 97424 Schweinfurt (DE)
(72) Erfinder: Johann, Herbert, 97078 Würzburg (DE); Vesper, Roman, 97526 Sennfeld (DE); Dahl, Petra, 97464 Niederwerrn (DE)

(56) Entgegenhaltungen:
- DE-A- 3 202 019
- DE-A- 19 947 435
- US-A- 5 676 230

## Beschreibung

Die Erfindung betrifft einen hydrodynamischen Drehmomentwandler gemäß dem Oberbegriff des Anspruches 1, und wie er aus dem Dokument US 5676230 A bekannt ist.

Ein solcher Drehmomentwandler ist beispielsweise durch die DE 197 52 187 A1 bekannt. Der Drehmomentwandler verfügt über ein Wandlergehäuse zur Aufnahme zumindest eines Pumpen-, eines Turbinen- und eines Leitrades, wobei die vorgenannten Räder zur Bildung eines hydrodynamischen Kreises dienen. Das Leitrad wird beidseits über je eine Axiallagerung positioniert, wobei axial zwischen einem Bauteil des Leitrades, insbesondere dessen Freilauf, und der besagten Axiallagerung je ein Stützelement vorgesehen ist, das der Axiallagerung zugeordnet und mit einer Stützelementen-Lagerseite der Axiallagerung zugewandt ist, mit einer Stützelementen-Leitradseite dagegen dem Freilauf des Leitrades. Diese Stützelemente verfügen über Strömungsdurchgänge für viskoses Medium, um auf diese Weise eine Verbindung zwischen zumindest einer an einer Druckquelle angeschlossenen Strömungsleitung und dem hydrodynamischen Kreis herzustellen, wobei der Strömungsdurchgang über ein Strömungsbett und, sich an dieses beidseits jeweils anschließend, über Begrenzungswände verfügt, die vom Strömungsbett auf das axiale Niveau der Stützelementen-Lagerseite führen.

Üblicherweise werden bei derartigen Drehmomentwandlern als Axiallagerungen Nadellager eingesetzt, die aus Kostengründen als sogenannte "Kompaktlager" ausgebildet sind und sich dadurch auszeichnen, dass sie über zwei zueinander drehbare, relativ dünne Lagerscheiben mit dazwischen angeordneten Wälzkörpern verfügen.

Da auf diese Axiallagerungen relativ große Axialkräfte ausgeübt werden, kann insbesondere dann, wenn das Stützelement an seiner Stützelementen-Lagerseite mit großvolumigen Strömungsdurchgängen ausgebildet ist, die diesem Strömungsdurchgang benachbarte Lagerscheibe unter der Wirkung der Wälzkörper des Kompaktlagers unter plastischer Verformung in den Strömungsdurchgang hineingedrückt werden, was letztendlich zu einer Schädigung der Axiallagerung sowie zu einer Verengung des Strömungsdurchganges führt. Zur Minderung dieses Problems kann zwar, wie bei der DE 197 52 187 A1 realisiert, der Strömungsdurchgang mit starker Komponente in Umfangsrichtung ausgebildet werden, um trotz der Strömungsdurchgänge stets radiale Kontaktflächen für die Lagerscheibe des Kompaktlagers an der Stützelementen-Lagerseite bereitstellen zu können, jedoch ergeben sich hierdurch unerwünscht lange Durchflusswege für das viskose Medium innerhalb der Strömungsdurchgänge. Dennoch sind, trotz dieser konstruktiven Maßnahme, plastische Verformungen an der betroffenen Lagerscheibe nicht vollends auszuschließen.

Der Erfindung liegt die Aufgabe zugrunde, jeweils einer Axiallagerung zugeordnete Stützelemente derart weiterzubilden, dass diese eine Schädigung von Lagerscheiben insbesondere eines Kompaktlagers vermeiden und dennoch einen vergleichbar hohen Volumenstrom viskosen Mediums auf kurzem Durchflussweg passieren lassen.

Diese Aufgabe wird erfindungsgemäß durch die im Kennzeichen des Anspruches 1 angegebenen Merkmale gelöst. Durch die im Wesentlichen ebenflächige Ausbildung des Stützelementes an dessen der Axiallagerung zugewandten Stützelementen-Lagerseite wird die Grundlage geschaffen, dass eine an der Axiallagerung vorgesehene Lagerscheibe - insbesondere bei Ausbildung der Axiallagerung als Kompaktlager - unterbrechungslos eine Abstützung an der Stützelementen-Lagerseite vorfindet, sodass insbesondere durch die Wälzkörper der Axiallagerung ausgeübte Axialkräfte großflächig über die Lagerscheibe auf das benachbarte Stützelement übertragen werden können.

Um bei dem Stützelement bei Einleitung einer Axialkraft eine plastische Verformung der Stützelementen-Lagerseite zu verhindern, ist der wenigstens eine Strömungsdurchgang, der erfindungsgemäß an der von der Axiallagerung abgewandten Stützelementen-Leitradseite vorgesehen ist, mit einer Versteifung in seinem Erstreckungsbereich ausgebildet, die durch zumindest partielle Verbindung zwischen einem Strömungsbett des Strömungsdurchganges und der wenigstens einen Begrenzungswand nicht nur den Strömungsdurchgang verformungsstabiler gestaltet, sondern gleichzeitig dazu befähigt ist, an der Stützelementen-Lagerseite aufgenommene Axialkräfte am Strömungsbett des Strömungsdurchganges aufzunehmen und über die wenigstens eine Begrenzungswand an die Stützelementen-Leitradseite weiterzuleiten, sodass diese Axialkraft unmittelbar auf das der Stützelementen-Leitradseite benachbarte Bauteil des Leitrades, wie beispielsweise den Freilauf-Außenring, einleitbar ist. Vorzugsweise wird hierbei die Versteifung an einer Stelle größerer Verformungsweichheit des Strömungsbettes vorgesehen, an welcher die durch die Versteifung ausgeübte Stabilisierung besonders hoch ist.

Da die Versteifung innerhalb des Strömungsdurchganges angeordnet ist und sich von dessen Strömungsbett aus in Richtung der Stützelementen-Leitradseite weisend, ausdehnt, wird durch die Versteifung kein Bauraum verbraucht, und zudem kann die Versteifung innerhalb des Strömungsdurchganges eine strömungsleitende Funktion enthalten. So kann einer Versteifung insbesondere am motorseitigen Stützelement die Funktion eines den Strömungsdurchgang einengenden Drosselelementes zugewiesen werden, was sich wie folgt erklärt:

Üblicherweise wird der Strömungsdurchgang des getriebeseitigen Stützelementes zur Versorgung des hydrodynamischen Kreises mit frischem viskosen Medium verwendet, während der Strömungsdurchgang im motorseitigen Stützelement zur Gewährleistung der Rückführung viskosen Mediums genutzt wird. Über den motorseitigen Strömungsdurchgang kann demnach auf einfache Weise eine Durchflussregelung für den hydrodynamischen Kreis geschaffen werden, wofür einerseits der motorseitige Strömungsdurchgang ein geringeres Durchflussvolumen wie der getriebeseitige Strömungsdurchgang aufweisen kann, was durch die in den Strömungsdurchgang hineinragende Versteifung durch weitere Verengung des Strömungsdurchganges noch verstärkt werden kann.

Gleichzeitig kann die Versteifung auch dazu benutzt werden, eine eventuell vorhandene Restleckage aus dem getriebeseitigen Strömungsdurchgang in den motorseitigen Strömungsdurchgang zumindest zu reduzieren, wobei diese Restleckage bevorzugt im radialen Erstreckungsbereich der Wälzkörper des Freilaufes erfolgt. Entweder kann durch die Versteifung durch Umlenken des vom getriebeseitigen Strömungsdurchgang ankommenden Mediums in Richtung zu seiner Herkunftsstelle das Problem der Restleckage gemindert werden, oder aber die Versteifung verschließt zumindest weitgehend den motorseitigen Strömungsdurchgang für das über die Restleckageverbindung ankommende viskose Medium.

Gemäß vorteilhafter Weiterbildungen verlaufen die Strömungsdurchgänge im Wesentlichen in radialer Richtung, sodass sich kurze Strömungswege für das viskose Medium innerhalb der Strömungsdurchgänge ergeben. Hierbei können die Strömungsdurchgänge wegen der glattflächigen Stützelementen-Lagerseite und wegen der Versteifungen in den Strömungsdurchgängen in Umfangsrichtung sehr breit ausgebildet sein.

Im Folgenden wird ein Ausführungsbeispiel der Erfindung anhand einer Zeichnung näher erläutert. Es zeigt:
- Fig. 1: Die obere Hälfte eines Längsschnittes durch einen Drehmomentwandler mit Axiallagerungen und mit über zumindest einen Strömungsdurchgang verfügenden, den Axialalgerungen jeweils zugeordneten Stützelementen;

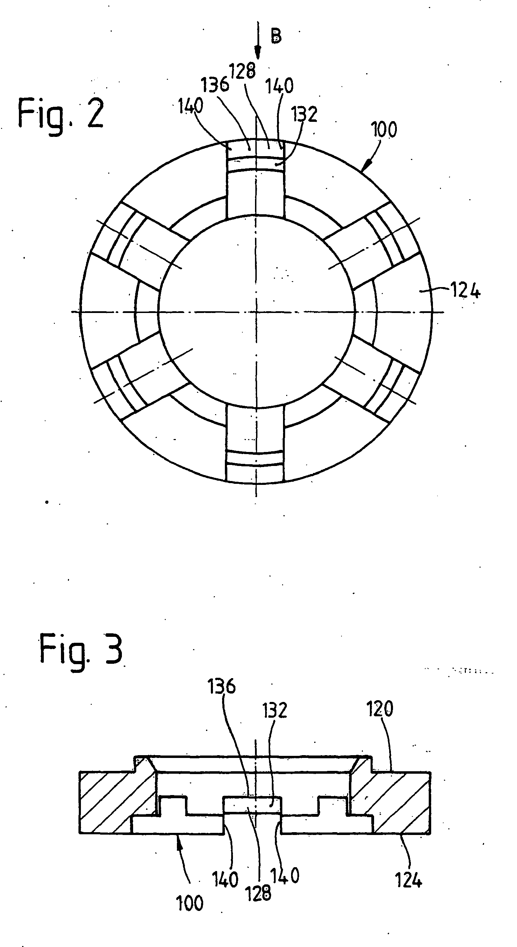

- Fig. 2: eine Herauszeichnung des getriebeseitigen Stützelementes der Fig. 1 mit Blickrichtung gemäß der Schnittlinie II-II in Fig. 1;
- Fig. 3: das Stützelement gemäß der mit Pfeil B dargestellten Blickrichtung in Fig. 2.

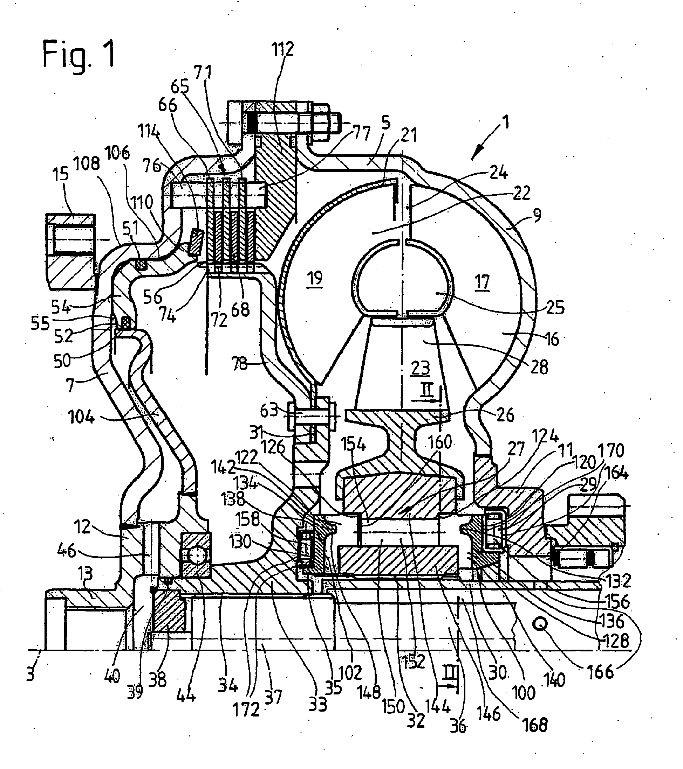

In Fig. 1 ist ein hydrodynamischer Drehmomentwandler 1 dargestellt, der um eine Drehachse 3 Rotationsbewegungen auszuführen vermag. Der hydrodynamische Drehmomentwandler 1 verfügt über ein Wandlergehäuse 5, das an seiner einem nicht gezeigten Antrieb, wie beispielsweise einer Brennkraftmaschine, zugewandten Seite einen Wandlerdeckel 7 aufweist, der fest mit einer Pumpenradschale 9 verbunden ist. Diese geht im radial inneren Bereich in eine Pumpenradnabe 11 über.

Zurückkommend auf den Wandlerdeckel 7, weist dieser im radial inneren Bereich eine einen Lagerzapfen 13 tragende Zapfennabe 12 auf, wobei der Lagerzapfen 13 in bekannter und daher nicht näher dargestellter Weise an einem Element des Antriebs, wie beispielsweise einer Kurbelwelle, zur antriebsseitigen Zentrierung des Wandlergehäuses 5 aufgenommen ist. Weiterhin verfügt der Wandlerdeckel 7 über eine Befestigungsaufnahme 15, die üblicherweise zur Befestigung des Wandlergehäuses 5 am Antrieb dient, und zwar vorzugsweise über eine nicht gezeigte Flexplatte. Bezüglich einer zeichnerischen Darstellung der Aufnahme des Lagerzapfens eines Drehmomentwandlers in einer Kurbelwelle eines Antriebs sowie einer Anbindung des Drehmomentwandlers über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über ein getriebeseitiges Stützelement 100, das einer benachbarten Axiallagerung 29 zugeordnet ist, an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist, und ebenso wie diese eine im Wesentlichen ringförmige erste Strömungsleitung 164 radial begrenzt. Die als Hohlwelle ausgebildete Stützwelle 30 ihrerseits umschließt eine Getriebeeingangswelle 36, die zusammen mit der Stützwelle 30 eine ebenfalls im Wesentlichen ringförmige zweite Strömungsleitung 168 radial begrenzt. Die Getriebeeingangswelle 36 ist mit einer Mittenbohrung 37 zum Durchgang von Hydraulikflüssigkeit versehen und nimmt über eine Verzahnung 34 eine Turbinennabe 33 drehfest, aber axial verschiebbar auf, wobei diese Turbinennabe 33 in einem radial äußeren Bereich zur Befestigung eines Turbinenradfußes 31 mittels einer Nietverbindung 63 dient. Die Turbinennabe 33 stützt sich einerseits über eine Axiallagerung 35 und ein derselben zugeordnetes, motorseitiges Stützelement 102 am bereits genannten Freilauf 27 ab, und kommt andererseits über eine Axiallagerung 44 an der Zapfennabe 12 zur Anlage. Nach radial innen hin ist die Turbinennabe 33 über eine Abdichtung 38 gegenüber der Getriebeeingangswelle 36 abgedichtet, nach radial außen durch eine Abdichtung 39 gegenüber der Zapfennabe 12.

Die bereits erwähnte Mittenbohrung 37 in der Getriebeeingangswelle 36 dient zur Druckbeaufschlagung einer zur Betätigung einer Überbrückungskupplung 56 benötigten Kammer 55, die axial zwischen dem Wandlerdeckel 7 und einem Kolben 54 der Überbrückungskupplung 56 angeordnet ist. Hierzu gelangt über die Mittenbohrung 37 der Getriebeeingangswelle 36 eingeströmte Hydraulikflüssigkeit in einen Übergangsraum 40 und von diesem über Kanäle 46 der als Strömungsdurchlass dienenden Zapfennabe 12 nach radial außen in die Kammer 55. Der Kolben 54 der Überbrückungskupplung 56 ist zentrisch zum Wandlerdeckel 7 angeordnet, mit seiner von der Kammer 55 abgewandten Seite dem hydrodynamischen Kreis 24 zugewandt und in Abhängigkeit von den Druckverhältnissen im hydrodynamischen Kreis 24 sowie in der Kammer 55 zwischen zwei unterschiedlichen Grenzstellungen axial bewegbar. Für diese Bewegung ist der Kolben 54 mittels eines Kolbenfußes 52 an einem an der Zapfennabe 12 befestigten Kolbenträger 104 und mittels einer Schiebeführung 106 an einem Axialrücksprung 108 des Wandlerdeckels 7 zentriert. Sowohl in die Schiebeführung 106 als auch in den Kolbenfuß 52 ist jeweils eine Kolbendichtung 50, 51 eingelassen, die ihre Abdichtfunktion zwischen dem hydrodynamischen Kreis 24 und der Kammer 55 wahrnimmt.

Axial zwischen einem Druckstempel 110 des Kolbens 54 und einer Anpressplatte 112, die axial zwischen dem Wandlerdeckel 7 und der Pumpenradschale 9 befestigt ist, ist ein Lamellenpaket 65 angeordnet, das über Außenlamellen 66 und über Innenlamellen 68 verfügt. Die Außenlamellen 66 sind an ihrem jeweiligen Außenumfang - in Umfangsrichtung gesehen - mit Verzahnungen 71 versehen, die mit am Wandlerdeckel 7 befestigten, als Außenlamellenträger 77 dienenden, zapfenförmigen Drehsicherungen 76 drehfest, aber axial verschiebbar, verbunden sind. Die Innenlamellen 68 wiederum sind an ihrem jeweiligen Innenumfang - in Umfangsrichtung gesehen - mit Verzahnungen 72 versehen, die mit Verzahnungen 74 eines am Turbinenradfuß 31 sowie an der Turbinennabe 33 befestigten Innenlamellenträgers 78 in drehfester, aber axial verschiebbarer Verbindung stehen.

Bei ausgerückter Überbrückungskupplung 55 steht der Kolben 54 in seiner in Fig. 1 eingezeichneten ersten Grenzstellung, in welcher die Lamellen 66, 68 axial entlastet sind. Zum Einrücken der Überbrückungskupplung 55 wird der Kolben 54 in eine zweite Grenzstellung in Richtung zur Anpressplatte 112 bewegt, so dass die Lamellen 66, 68 zur Übertragung eines Drehmomentes in Achsrichtung belastet sind, und zwar über eine axial zwischen dem Druckstempel 110 des Kolbens 54 und der dem Kolben 54 nächstliegenden Lamelle 66 angeordnete Axialfeder 114. Die Axialfeder 114 ermöglicht ein weicheres Einrücken der Überbrückungskupplung 56 sowie ein Rückstellen des Kolbens 54 in seine erste Grenzstellung, sobald der in der Kammer 55 anliegende Druck gegenüber dem Druck im hydrodynamischen Kreis 24 wieder abgesenkt ist.

Zurückkommend auf das getriebeseitige Stützelement 100 zwischen der Axiallagerung 29 an der Pumpenradnabe 11 und dem Leitrad 23, weist dieses Stützelement 100 eine der Axiallagerung 29 zugewandte Stützelementen-Lagerseite 120 auf, während eine dem Leitrad 23 zugewandte Stützelementen-Leitradseite 124 in den Freilauf 27 des Leitrades 23 axial eingreift, und zwar, sich am äußeren Laufring 144 des Freilaufes 27 axial abstützend, im Wesentlichen in einen radialen Erstreckungsbereich zwischen diesem Laufring 144 und einem radial inneren Laufring 146, wobei dieser Erstreckungsbereich des Freilaufes 27 über Wälzkörper 150 verfügt. Dadurch ist das Leitrad 23 über den Freilauf 27 gegenüber dem getriebeseitigen Stützelement 100 zentriert und axial festgelegt. Das getriebeseitige Stützelement 100 ist seinerseits gegenüber der Axiallagerung 29 zentriert und axial mit dieser in Anlage, wobei die Axiallagerung 29 an der Pumpenradnabe 11 zentriert und axial gesichert gehalten ist. Motorseitig ist das Leitrad 23 ebenfalls zentriert und axial gesichert aufgenommen, und zwar durch das motorseitige Stützelement 102, das sich mit einer der Axiallagerung 35 zugewandten Stützelementen-Lagerseite 122 an der Turbinennabe 33 abstützt und mit einer dem Leitrad 23 zugewandten Stützelementen-Leitradseite 126 am radial äußeren Laufring 144 des Freilaufes 23. Auch das motorseitige Stützelement 102 greift, wie bereits das getriebeseitige Stützelement 100, mit seiner Stützelementen-Leitradseite 126 im Wesentlichen in den radialen Bereich des Freilaufes 27, in welchem dessen Wälzkörper 150 enthalten sind.

Über diese Zentrier- und axiale Sicherungsfunktion der Stützelemente 100, 102 hinausgehend, sind diese zudem mit Strömungsdurchgängen 128, 130 versehen. Durch die Strömungsdurchgänge 128 des getriebeseitigen Stützelementes 100 wird die radial zwischen der Pumpenradnabe 11 und der Stützwelle 30 verlaufende, erste Strömungsleitung 164 mit dem hydrodynamischen Kreis 24 verbunden. Die erste Strömungsleitung 164 steht über Radialdurchgänge 166 in der Stützwelle 30 mit der zweiten Strömungsleitung 168 radial zwischen der Stützwelle 30 und der Getriebeeingangswelle 36 in Strömungsverbindung. Die zweite Strömungsleitung 168 steht im Wesentlichen mit den Strömungsdurchgängen 130 des motorseitigen Stützelementes 102 in Strömungsverbindung.

Bei der vorliegenden Ausführung des Drehmomentwandlers 1 soll der hydrodynamische Kreis 24 im Wesentlichen über die Strömungsdurchgänge 128 des getriebeseitigen Stützelementes 100 versorgt werden. Im Gegensatz dazu soll über die Strömungsdurchgänge 130 des motorseitigen Stützelementes 102 eine Durchflussregelung des hydrodynamischen Kreises 24 ermöglicht werden. Diese Funktionsaufteilung der beiden Stützelemente 100, 102 führt zu einer größeren Dimensionierung der Strömungsquerschnitte der Strömungsdurchgänge 128 im getriebeseitigen Stützelement 100 gegenüber den Strömungsquerschnitten der Strömungsdurchgänge 130 im motorseitigen Stützelement 102. Beim getriebeseitigen Stützelement 100 ist beispielsweise ein großer Strömungsquerschnitt an den Strömungsdurchgängen 128 erzielbar, indem, ausgehend von einem Strömungsbett 136 jedes Strömungsdurchganges 128, sich die beidseits des Strömungsbettes 136 anschließenden Begrenzungswände 140 mit hinreichender Weite in Richtung zum benachbarten Freilauf 27 und damit bis zur Stützelementen-Leitradseite 124 erstrecken. Auch die Strömungsdurchgänge 130 des motorseitigen Stützelementes 102 verfügen jeweils über ein Strömungsbett 138, von welchem sich Begrenzungswände 142 in Richtung zum benachbarten Leitrad 27 und damit bis an die Stützelementen-Leitradseite 126 erstrecken, jedoch ist die Erstreckungsweite der Begrenzungswände 142 zwischen dem Strömungsbett 138 und der Stützelementen-Leitradseite 126 kleiner als die Erstreckungsweite der Begrenzungswände 140 zwischen dem Strömungsbett 136 und der Stützelementen-Leitradseite 124. Zwangsläufig ergeben sich damit am getriebeseitigen Stützelement 100 in Achsrichtung tiefere Strömungsdurchgänge 128 als am motorseitigen Stützelement 102. Selbstverständlich müssen die Strömungsdurchgänge 128, 130 an den Stützelementen 100, 102 nicht zwingend von unterschiedlicher Tiefe sein, sondern sie können, um unterschiedliche Durchflussleistungen zu erzeugen, sich auch bezüglich ihrer Dimensionierung im Umfangsrichtung voneinander unterscheiden, wobei in diesem Fall das Strömungsbett 136 des Strömungsdurchganges 128 des getriebeseitigen Stützelementes 100 in Umfangsrichtung breiter ausgebildet ist als das Strömungsbett 138 des Strömungsdurchganges 130 des motorseitigen Stützelementes 102. Auch ist eine Kombination unterschiedlich breiter Strömungsbetten 136, 138 mit unterschiedlich hohen Begrenzungswänden 140, 142 denkbar zur Erzielung von Strömungsdurchgängen 128, 130 mit unterschiedlichen Strömungsquerschnitten.

Die Begrenzungswände 140, 142 der Stützelemente 100, 102 verfügen im Wesentlichen im radialen Erstreckungsbereich der Wälzkörper 150 des Freilaufes 27 über ihre größte axiale Erstreckungsweite. Bevorzugt in diesem Radialbereich, in welchem auch die jeweilige Axiallagerung 29, 35 jeweils in Anlagekontakt mit der jeweils zugeordneten Stützelementen-Lagerseite 120, 122 steht, sind die Stützelemente 100, 102 jeweils mit Versteifungen 132, 134 versehen, die, jeweils innerhalb der Strömungsdurchgänge 128, 130 angeordnet, einerseits über eine Verbindung mit dem Strömungsbett. 136, 138 und andererseits über eine Verbindung mit den Begrenzungswänden 140, 142 verfügen. Die Versteifungen 132, 134 sind, jeweils in Richtung zum benachbarten Leitrad 23 vorspringend, gegenüber dem jeweiligen Strömungsbett 136, 138 erhaben ausgebildet und bewirken einerseits aufgrund der durch sie bedingen Materialanhäufung im Radialbereich der Stützelementen-Lagerseite 120, 122 eine erhöhte Stabilität gegenüber Axialkräften, die von den jeweils an der Stützelementen-Lagerseite 120, 122 anliegenden Axiallagerungen 29, 35 ausgeübt werden, und andererseits verbinden die Versteifungen 132, 134 im Erstreckungsbereich der Strömungsdurchgänge 128, 130 bevorzugt die beiden Begrenzungswände 140, 142 miteinander, sodass von der Stützelementen-Lagerseite 120, 122 eingeleitete Axialkräfte über die Versteifungen 132, 134 auf die benachbarten Stützelementen-Leitradseiten 124, 126 übertragen werden können, sodass auf diese Weise eine von der Axiallagerung 29, 35 aufgenommene Axialkraft an den radial äußeren Laufring 144 des Freilaufes 27 weitergeleitet werden kann. Durch Verwendung der Versteifungen 132, 134 ist somit die Möglichkeit gegeben, die Strömungsdurchgänge 128, 130 der Stützelemente 100, 102 jeweils an deren dem Leitrad 23 zugewandten Seite auszuführen, sodass die Axiallagerungen 29, 35 bevorzugt jeweils als "Kompaktlager" ausgebildet werden können, die sich dadurch auszeichnen, dass vorzugsweise nadelförmige Wälzkörper 156, 158 jeweils mit Lagerscheiben 170, 172 zusammenwirken, die mit sehr geringem Querschnitt ausgebildet sind und daher Axialkräfte, die jeweils durch die Wälzkörper 156, 158 in Richtung zu den Stützelementen 100, 102 weitergeleitet werden, mit teilweise vergleichbar hoher Linienbelastung an die Stützelemente 100, 102 übertragen werden.

Von der ersten Strömungsleitung 164 einströmendes viskoses Medium fließt über die Strömungsdurchgänge 128 des getriebeseitigen Stützelementes 100 nach radial außen, wo es zwar durch die Versteifungen 132 geringfügig in Richtung zum motorseitigen Stützelement 102 umgelenkt werden kann, jedoch sind am Freilauf 27 Maßnahmen getroffen, durch welche der weitaus überwiegende Teil des viskosen Mediums die Versteifungen 132 des getriebeseitigen Stützelementes 100 umströmt, um danach radial weiter nach außen in den hydrodynamischen Kreis 24 vorzudringen.

Eine dieser Maßnahmen am Freilauf 27 kann beispielsweise in einem vergleichsweise engen Strömungsquerschnitt des motorseitigen Stützelementes 102 liegen, sodass allein bereits aufgrund dieser Maßnahme die Strömungsdurchgänge 130 des motorseitigen Stützelementes 102 eine Drosselfunktion übernehmen, die ein Nachströmen viskosen Mediums über einen Strömungsweg 152 zumindest erheblich behindern, wobei dieser Strömungsweg 152 im radialen Erstreckungsbereich der Wälzkörper 150 des Freilaufes 27 liegt, und zwar - in Umfangsrichtung - zwischen jeweils zweien der Wälzkörper 150. Insofern handelt es sich bei diesem Strömungsweg 152 um eine Restleckageverbindung 154, sodass wirksam vermieden ist, dass über die Strömungsdurchgänge 128 des getriebeseitigen Stützelementes 100 einfließendes viskoses Medium auf direktem Weg über den Strömungsweg 152 entlang der Strömungsdurchgänge 130 des motorseitigen Stützelementes 102 den Bereich unverzüglich wieder verlassen kann, ohne zuvor dem hydrodynamischen Kreis 24 zur Verfügung gestanden zu haben.

Am motorseitigen Stützelement 102 können die Versteifungen 134 einerseits diese Drosselfunktion verstärken, weshalb sie als Drosselelement 148 wirksam sind, sie können andererseits aber auch vom hydrodynamischen Kreis 24 kommendes viskoses Medium in Richtung zum getriebeseitigen Stützelement 100 umlenken und dadurch die Restleckageverbindung 154 mit Fluid befüllen, wodurch ein Nachströmen viskosen Mediums vom getriebeseitigen Stützelement 100 erheblich reduziert werden kann. Des Weiteren kann vorgesehen sein, im Erstreckungsbereich der Restleckageverbindung 154 eine Strömungsumlenkung 160 vorzusehen, welche die Restleckageverbindung 154 zumindest teilweise verschließt. Die Strömungsumlenkung 160 kann in Form eines in den Freilauf 27 eingesetzten Dichtbleches (Fig. 1) realisiert sein, das, im Wesentlichen radial zwischen den beiden Laufringen 144, 146 angeordnet, sich im Wesentlichen im Erstreckungsbereich der Wälzkörper 150 befindet und somit die Restleckageverbindung 154 teilweise oder vollständig gegenüber dem Strömungsdurchgang 130 des motorseitigen Stützelementes 102 trennt.

Viskoses Medium, das aus dem hydrodynamischen Kreis 24 abströmen soll, fließt über den Strömungsdurchgang 130 des motorseitigen Stützelementes 102 in die zweite Strömungsleitung 168, die ebenso wie die erste Strömungsleitung 164 und die Mittenbohrung 37 der Getriebeeingangswelle 36 an eine nicht gezeigte, in üblicher Weise ausgebildete Druckquelle angeschlossen ist. Eine derartige Druckquelle ist beispielsweise in der DE 44 23 640 C2 in Fig. 1 zeichnerisch dargestellt.

### Bezugszeichenliste

- 1.: hydrodyn. Drehmomentwandler
- 3.: Drehachse
- 5.: Wandlergehäuse
- 7.: Wandlerdeckel
- 9.: Pumpenschale
- 11.: Pumpenradnabe
- 12.: Zapfennabe
- 13.: Lagerzapfen
- 15.: Befestigungsaufnahme
- 16: Pumpenradschaufeln
- 17.: Pumpenrad
- 19.: Turbinenrad
- 21.: Turbinenradschale
- 22: Turbinenradschaufeln
- 23.: Leitrad
- 24.: hydrodynamischer Kreis
- 25.: Innentorus
- 26.: Leitradnabe
- 27.: Freilauf
- 28: Leitradschaufeln
- 29.: Axiallagerung
- 30.: Stützwelle
- 31.: Turbinenradfluss
- 32: Verzahnung
- 33.: Turbinennabe
- 34: Verzahnung
- 35.: Axiallagerung
- 36.: Getriebeeingangswelle
- 37.: Mittenbohrung
- 38,39: Abdichtung
- 40.: Übergangsraum
- 44.: Axiallagerung
- 46.: Strömungsdurchlass
- 50,51: Abdichtung
- 52.: Kolbenfuß
- 54.: Kolben
- 55.: Kammer
- 56.: Überbrückungskupplung
- 60.: Aufnahmevorrichtung
- 62,63: Nietverbindung
- 64.: Anschlag
- 65.: Lamellenpaket
- 66.: Außenlamellen
- 68.: Innenlamellen
- 71,72: Verzahnungen
- 74.: Verzahnungen
- 76.: Drehsicherungen
- 77.: Außenlamellenträger
- 78.: Innenlamellenträger
- 100.: getriebeseitiges Stützelement
- 102.: motorseitiges Stützelement
- 104.: Kolbenträger
- 106.: Schiebeführung
- 108.: Axialrücksprung am Wandlerdeckel
- 110.: Druckstempel des Kolbens
- 112.: Anpressplatte
- 120,122: Stützelementen-Lagerseite
- 124, 126: Stützelementen-Leitradseite
- 128, 130: Strömungsdurchlässe
- 132, 134: Versteifungen
- 136, 138: Strömungsbett
- 140, 142: Begrenzungswände
- 144, 146: Laufringe des Freilaufs
- 148.: Drosselelement
- 150.: Wälzkörper des Freilaufs
- 152.: Strömungsweg
- 154.: Restleckageverbindung
- 156, 158: Wälzkörper der Axiallagerungen
- 160.: Strömungsumlenkung
- 164.: erste Strömungsleitung
- 166.: Radialdurchgänge
- 168.: zweite Strömungsleitung
- 170, 172: Lagerscheiben

## Patentansprüche

1. Hydrodynamischer Drehmomentwandler mit einem Wandlergehäuse zur Aufnahme zumindest eines Pumpen-, eines Turbinen- und eines Leitrades zur Bildung eines hydrodynamischen Kreises, sowie mit zumindest einer das Leitrad abstützenden Axiallagerung, der zumindest ein Stützelement zugeordnet ist, das an einer der Axiallagerung zugewandten Stützelementen-Lagerseite an der Axiallagerung und an einer von dieser abgewandten Stützelementen-Leitradseite mit einem Bauteil des Leitrades in Anlage kommt, und mit wenigstens einem Strömungsdurchgang für viskoses Medium versehen ist, der eine Verbindung zwischen zumindest einer Strömungsleitung und dem hydrodynamischen Kreis bildet, wobei der Strömungsdurchgang über ein Strömungsbett und, sich an dieses anschließend, über wenigstens eine Begrenzungswand verfügt, die vom Strömungsbett auf das axiale Niveau der entsprechenden Stützelementen-Seite führt,
**dadurch gekennzeichnet, dass**
das Stützelement (100, 102) an seiner der Axiallagerung (29, 35) zugewandten Stützelementen-Lagerseite (120, 122) im wesentlichen ebenflächig ausgebildet und an seiner von der Axiallagerung (29, 35) abgewandten Stützelementen-Leitradseite (124, 126) mit wenigstens einem Strömungsdurchgang (128, 130) versehen ist, in dessen Erstreckungsbereich eine Versteifung (132, 134) vorgesehen ist, die eine zumindest partielle Verbindung zwischen dem Strömungsbett (136, 138) des Strömungsdurchganges (128, 130) und der wenigstens einen Begrenzungswand (140, 142) herstellt.

2. Hydrodynamischer Drehmomentwandler nach Anspruch 1,
**dadurch gekennzeichnet, dass**
der Strömungsdurchgang (128, 130), ausgehend vom Strömungsbett (136, 138), in Richtung der Stützelementen-Leitradseite (124, 126) weisend, erhaben ausgebildet ist.

3. Hydrodynamischer Drehmomentwandler nach Anspruch 2,
**dadurch gekennzeichnet, dass**
das Stützelement (100) jeweils mit seiner Stützelementen-Leitradseite (124, 126) einen der Laufringe (144, 146) eines Freilaufes (27) als Bauteil des Leitrades (23) axial positioniert und mit seiner Versteifung (132, 134) jeweils in Richtung dieses Leitrades (23) gegenüber dem Strömungsbett (136, 138) vorspringt.

4. Hydrodynamischer Drehmomentwandler nach Anspruch 2 oder 3,
**dadurch gekennzeichnet, dass**
am Stützelement (100, 102) die Versteifung (132, 134) im wesentlichen senkrecht zum Strömungsdurchgang (128, 130) verläuft.

5. Hydrodynamischer Drehmomentwandler nach Anspruch 2, 3 oder 4,
**dadurch gekennzeichnet, dass**
das Stützelement (100, 102) bei getriebeseitiger Anordnung gegenüber dem Leitrad (23) mit seiner Stützelementen-Lagerseite (120) an einer getriebeseitigen Axiallagerung (29) zur Anlage kommt, die sich an einer abtriebsseitigen Pumpenradnabe (11) des Wandlergehäuses (5) abstützt.

6. Hydrodynamischer Drehmomentwandler nach Anspruch 2, 3 oder 4,
**dadurch gekennzeichnet, dass**
das Stützelement (102) bei motorseitiger Anordnung gegenüber dem Leitrad (23) mit seiner Stützelementen-Lagerseite (122) an einer motorseitigen Axiallagerung (35) zur Anlage kommt, die sich an einer Turbinennabe (33) des Turbinenrades (19) abstützt.

7. Hydrodynamischer Drehmomentwandler nach einem der Ansprüche 1 bis 6
**dadurch gekennzeichnet, dass**
bei Anordnung eines ersten Stützelementes (102) motorseitig des Leitrades (23) und eines zweiten Stützelementes (100) getriebeseitig des Leitrades (23) das eine Stützelement (100) über einen Strömungsdurchgang (128) großen Strömungsquerschnittes zur wesentlichen Versorgung des hydrodynamischen Kreises (24) mit viskosem Medium verfügt, während das andere Stützelement (102) mit einem Strömungsdurchgang (130) versehen ist, der gegenüber dem Strömungsdurchgang (128) des erstgenannten Stützelementes (100) zur Einstellung des Volumenstromes im hydrodynamischen Kreis (24) mit reduziertem Strömungsquerschnitt ausgebildet ist.

8. Hydrodynamischer Drehmomentwandler nach Anspruch 7,
**dadurch gekennzeichnet, dass**
das getriebeseitige Stützelement (100) mit dem größeren Strömungsdurchgang (128) gegenüber dem motorseitigen Stützelement (102) ausgebildet ist.

9. Hydrodynamischer Drehmomentwandler nach einem der Ansprüche 6 oder 7,
**dadurch gekennzeichnet, dass**
bei dem motorseitigen Stützelement (102) die Versteifung (134) als den Strömungsdurchgang (130) einengendes Drosselelement (148) wirksam ist.

10. Hydrodynamischer Drehmomentwandler nach einem der Ansprüche 1 bis 9 mit radial zwischen den Freilaufringen des Freilaufes angeordneten Wälzkörpern,
**dadurch gekennzeichnet, dass**
den Strömungsdurchgängen (128, 130) der beiden Stützelemente (100, 102) im Erstreckungsbereich der Wälzkörper (150) des Freilaufes (23) in Umfangsrichtung zwischen je zweien dieser Wälzkörper (150) jeweils ein Strömungsweg (152) zugeordnet ist, der Teil einer Restleckageverbindung (154) zwischen den beiden Strömungsdurchgängen (128, 130) ist.

11. Hydrodynamischer Drehmomentwandler nach einem der Ansprüche 1 bis 10,
**dadurch gekennzeichnet, dass**
die Strömungsdurchgänge (128, 130) im wesentlichen in radialer Richtung in der Stützelementen-Leitradseite (124, 126) verlaufen.

12. Hydrodynamischer Drehmomentwandler nach einem der Ansprüche 1 bis 11,
**dadurch gekennzeichnet, dass**
die Strömungsdurchgänge (128, 130) in Umfangsrichtung jeweils über eine Erstreckung verfügen, die zumindest dem Durchmesser eines Wälzkörpers (156, 158) der dem Stützelement (100, 102) jeweils zugeordneten Axiallagerung (29, 35) entspricht.

13. Hydrodynamischer Drehmomentwandler nach einem der Ansprüche 1 bis 12,
**dadurch gekennzeichnet, dass**
die Strömungsdurchgänge (128, 130) die jeweilige Versteifung (132, 134) im wesentlichen in demjenigen radialen Erstreckungsbereich der Stützelemente (100, 102) aufweisen, in welchem deren jeweilige Stützelementen-Lagerseite (120, 122) in Kontakt mit der jeweils zugeordneten Axiallagerung (29, 35) steht.

14. Hydrodynamischer Drehmomentwandler nach Anspruch 10,
**dadurch gekennzeichnet, dass**
der Restleckageverbindung (154) im Kontaktbereich mit dem motorseitigen Stützelement (102) eine Strömungsumlenkung (160) zugeordnet ist, durch welche vom getriebeseitigen Stützelement (100) kommendes viskoses Fluid zu dem an diesem Stützelement (100) vorgesehenen Strömungsdurchgang (128) rückleitbar ist.

## Claims

1. Hydrodynamic torque converter, comprising a converter housing for receiving at least a pump wheel, a turbine wheel and a stator to form a hydrodynamic circuit, and comprising at least one axial bearing supporting the stator, with which axial bearing there is associated at least one support element which comes into abutment, on a bearing side thereof oriented towards the axial bearing, against the axial bearing, and, on a stator side thereof oriented away from said axial bearing, with a component of the stator, and is provided with at least one flow passage for viscous medium which forms a connection between at least one flow conduit and the hydrodynamic circuit, the flow passage including a flow bed and at least one boundary wall adjoining said flow bed, which boundary wall leads from the flow bed to the axial level of the corresponding side of the support element, **characterized in that** the support element (100, 102) has a substantially flat configuration on its bearing side (120, 122) oriented towards the axial bearing (29, 35) and is provided on its stator side (124, 126) oriented away from the axial bearing (29, 35) with at least one flow passage (128, 130) within the range of extension of which there is provided a stiffening element (132, 134) which establishes an at least partial connection between the flow bed (136, 138) of the flow passage (128, 130) and the at least one boundary wall (140, 142).

2. Hydrodynamic torque converter according to Claim 1, **characterized in that** the flow passage (128, 130) has a bulged configuration, starting from the flow bed (136, 138) and oriented in the direction of the stator side (124, 126) of the support element.

3. Hydrodynamic torque converter according to Claim 2, **characterized in that** the support element (100) axially positions with its respective stator side (124, 126) one of the races (144, 146) of a freewheel (27) as a component of the stator (23), and projects with its respective stiffening element (132, 134) in the direction of said stator (23) with respect to the flow bed (136, 138).

4. Hydrodynamic torque converter according to Claim 2 or 3, **characterized in that** the stiffening element (132, 134) on the support element (100, 102) is disposed substantially perpendicularly to the flow passage (128, 130).

5. Hydrodynamic torque converter according to Claim 2, 3 or 4, **characterized in that** the bearing side (120) of the support element (100, 102), with said support element (100, 102) arranged on the transmission side with respect to the stator (23), comes into abutment with a transmission-side axial bearing (29) which bears against an output-side pump-wheel hub (11) of the converter housing (5).

6. Hydrodynamic torque converter according to Claim 2, 3 or 4, **characterized in that** the bearing side (122) of the support element (102), with said support element (102) arranged on the engine side with respect to the stator (23), comes into abutment with an engine-side axial bearing (35) which bears against a turbine hub (33) of the turbine wheel (19).

7. Hydrodynamic torque converter according to any one of Claims 1 to 6, **characterized in that**, with a first support element (102) arranged on the engine side of the stator (23) and a second support element (100) arranged on the transmission side of the stator (23), the one support element (100) has a flow passage (128) with a large flow cross section for substantially supplying the hydrodynamic circuit (24) with viscous medium, while the other support element (102) is provided with a flow passage (130) which is configured with a reduced flow cross section, as compared to the flow passage (128) of the first-mentioned support element (100), for adjusting the volume flow in the hydrodynamic circuit (24).

8. Hydrodynamic torque converter according to Claim 7, **characterized in that** the transmission-side support element (100) with the larger flow passage (128) is configured opposite the engine-side support element (102).

9. Hydrodynamic torque converter according to either of Claims 6 and 7, **characterized in that** the stiffening element (134) on the engine-side support element (102) acts as a throttle element (148) restricting the flow passage (130).

10. Hydrodynamic torque converter according to any one of Claims 1 to 9 with rolling elements arranged radially between the races of the freewheel, **characterized in that** a flow path (152) is associated with each of the flow passages (128, 130) of the two support elements (100, 102) within the range of extension of the rolling elements (150) of the freewheel (23), between each two of these rolling elements (150) in the circumferential direction, which flow path (152) forms part of a residual leakage connection (154) between the two flow passages (128, 130).

11. Hydrodynamic torque converter according to any one of Claims 1 to 10, **characterized in that** the flow passages (128, 130) are disposed substantially in a radial direction in the stator sides (124, 126) of the support elements.

12. Hydrodynamic torque converter according to any one of Claims 1 to 11, **characterized in that** the flow passages (128, 130) each have an extension in the circumferential direction which corresponds at least to the diameter of a rolling element (156, 158) of the axial bearing (29, 35) associated with the respective support element (100, 102).

13. Hydrodynamic torque converter according to any one of Claims 1 to 12, **characterized in that** the flow passages (128, 130) have the respective stiffening elements (132, 134) substantially within the same radial range of extension of the support elements (100, 102) in which the respective bearing sides (120, 122) thereof are in contact with the respective associated axial bearings (29, 35).

14. Hydrodynamic torque converter according to Claim 10, **characterized in that** a flow deviation (160), through which viscous fluid coming from the transmission-side support element (100) can be returned to the flow passage (128) provided on said support element (100), is associated with the residual leakage connection (154) in the contact area with the engine-side support element (102).

## Revendications

1. Convertisseur de couple hydrodynamique comprenant un boîtier de convertisseur pour recevoir au moins une roue de pompe, une roue de turbine et un distributeur de turbine pour former un circuit hydrodynamique, et comprenant au moins un palier axial qui soutient le distributeur de turbine, lequel est associé à au moins un élément support qui vient s'appuyer sur un côté palier de l'élément support faisant face au palier axial au niveau du palier axial et avec un composant du distributeur de turbine sur le côté distributeur de turbine d'élément support à l'opposé de celui-ci, et qui est muni d'au moins un passage d'écoulement pour un fluide visqueux, lequel forme une liaison entre au moins une conduite d'écoulement et le circuit hydrodynamique, le passage d'écoulement disposant d'un lit d'écoulement et d'au moins une paroi de délimitation qui vient se rattacher à celui-ci et qui mène du lit d'écoulement au niveau axial du côté correspondant de l'élément support, **caractérisé en ce que** l'élément support (100, 102) est de forme essentiellement plane sur son côté palier d'élément support (120, 122) faisant face au palier axial (29, 35) et il est muni d'au moins un passage d'écoulement (128, 130) sur son côté distributeur de turbine d'élément support (124, 126) à l'opposé du palier axial (29, 35), dans la zone de projection duquel est prévu un renforcement (132, 134) qui réalise une liaison au moins partielle entre le lit d'écoulement (136, 138) du passage d'écoulement (128, 130) et l'au moins une paroi de délimitation (140, 142).

2. Convertisseur de couple hydrodynamique selon la revendication 1, **caractérisé en ce que** le passage d'écoulement (128, 130) est configuré en relief en partant du lit d'écoulement (136, 138) et en direction du côté distributeur de turbine d'élément support (124, 126).

3. Convertisseur de couple hydrodynamique selon la revendication 2, **caractérisé en ce que** l'élément support (100) réalise à chaque fois avec son côté distributeur de turbine d'élément support (124, 126) le positionnement axial de l'une des bagues de roulement (144, 146) d'un dispositif de roue libre (27) en tant que composant du distributeur de turbine (23) et, avec son renforcement (132, 134), fait à chaque fois saillie en direction de ce distributeur de turbine (23) par rapport au lit d'écoulement (136, 138).

4. Convertisseur de couple hydrodynamique selon la revendication 2 ou 3, **caractérisé en ce que** le renforcement (132, 134) sur l'élément support (100, 102) s'étend pour l'essentiel perpendiculairement au passage d'écoulement (128, 130).

5. Convertisseur de couple hydrodynamique selon la revendication 2, 3 ou 4, **caractérisé en ce que** l'élément support (100, 102), lors d'une disposition côté engrenage par rapport au distributeur de turbine (23), vient s'appuyer avec son côté palier d'élément support (120) contre un palier axial (29) côté engrenage, lequel s'appuie sur un moyeu de roue de pompe (11) côté sortie du boîtier convertisseur.

6. Convertisseur de couple hydrodynamique selon la revendication 2, 3 ou 4, **caractérisé en ce que** l'élément support (102), lors d'une disposition côté moteur par rapport au distributeur de turbine (23), vient s'appuyer avec son côté palier d'élément support (122) contre un palier axial (35) côté moteur, lequel s'appuie sur un moyeu de turbine (33) de la roue de turbine (19).

7. Convertisseur de couple hydrodynamique selon l'une des revendications 1 à 6, **caractérisé en ce que** lors d'une disposition d'un premier élément support (102) côté moteur du distributeur de turbine (23) et d'un deuxième élément support (100) côté engrenage du distributeur de turbine (23), un élément support (100) dispose d'un passage d'écoulement (128) à grande section transversale d'écoulement pour essentiellement alimenter le circuit hydrodynamique (24) avec un fluide visqueux, alors que l'autre élément support (102) est muni d'un passage d'écoulement (130) qui, par rapport au passage d'écoulement (128) de l'élément support (100) mentionné en premier, est configuré avec une section transversale d'écoulement réduite pour régler le débit volumique dans le circuit hydrodynamique (24).

8. Convertisseur de couple hydrodynamique selon la revendication 7, **caractérisé en ce que** l'élément support (100) côté engrenage est réalisé avec le plus grand passage d'écoulement (128) par rapport à l'élément support (102) côté moteur.

9. Convertisseur de couple hydrodynamique selon l'une des revendications 6 ou 7, **caractérisé en ce que** sur l'élément support (102) côté moteur, le renforcement (134) fait office d'élément d'obturation (148) rétrécissant le passage d'écoulement (130).

10. Convertisseur de couple hydrodynamique selon l'une des revendications 1 à 9, comprenant des corps cylindriques disposés dans le sens radial entre les bagues de roulement libre du dispositif de roue libre, **caractérisé en ce que** dans la zone de projection des corps cylindriques (150) du dispositif de roue libre (23), dans le sens du pourtour à chaque fois entre deux de ces corps cylindriques (150), une voie d'écoulement (152) est à chaque fois associée aux passages d'écoulement (128, 130) des deux éléments supports (100, 102), laquelle fait partie d'une liaison de fuite résiduelle (154) entre les deux passages d'écoulement (128, 130).

11. Convertisseur de couple hydrodynamique selon l'une des revendications 1 à 10, **caractérisé en ce que** les passages d'écoulement (128, 130) s'étendent pour l'essentiel dans le sens radial dans le côté distributeur de turbine des éléments supports (124, 126).

12. Convertisseur de couple hydrodynamique selon l'une des revendications 1 à 11, **caractérisé en ce que** les passages d'écoulement (128, 130) disposent à chaque fois dans le sens du pourtour d'une projection qui correspond au moins au diamètre d'un corps cylindrique (156, 158) du palier axial (29, 35) à chaque fois associé à l'élément support (100, 102).

13. Convertisseur de couple hydrodynamique selon l'une des revendications 1 à 12, **caractérisé en ce que** les passages d'écoulement (128, 130) présentent le renforcement (132, 134) respectif pour l'essentiel dans la zone de projection radiale des éléments supports (100, 102) dans laquelle le côté palier des éléments supports (120, 122) correspondant est en contact avec le palier axial (29, 35) à chaque fois associé.

14. Convertisseur de couple hydrodynamique selon la revendication 10, **caractérisé en ce qu'**une déviation de l'écoulement (160) est associée à la liaison de fuite résiduelle (154) dans la zone de contact avec l'élément support (102) côté moteur, à travers laquelle le fluide visqueux en provenant de l'élément support (100) côté engrenage peut être renvoyé au passage d'écoulement (128) prévu sur cet élément support (100).
